# FASCICULE DE BREVET EUROPEEN

(11) **EP 1 826 607 B1**
(45) Date de publication et mention de la délivrance du brevet: **04.08.2010**
(21) Numéro de dépôt: 06110432.9
(22) Date de dépôt: 27.02.2006
(51) Int. Cl.: G02F 1/13357, G02B 6/00, G04G 9/00

(54) **Dispositif d'affichage à cristaux liquides affichant des segments colorés et pièce d'horlogerie équipée de ce dispositif**
Flüssigkristallanzeigeeinrichtung, die farbige Segmente anzeigt und mit einer solchen Einrichtung ausgestattete Uhr
Liquid crystal display device displaying coloured segments and timepiece equipped with such a device

(43) Date de publication de la demande: 29.08.2007
(73) Titulaire: The Swatch Group Research and Development Ltd., 2074 Marin (CH)
(72) Inventeur: Grosjacques, Emile, 2072, Saint-Blaise (CH); Winkler, Pascal, 2072, Saint-Blaise (CH)
(74) Mandataire: Ravenel, Thierry Gérard Louis

(56) Documents cités:
- EP-A- 1 072 907
- US-A1- 2002 044 436
- US-A1- 2002 054 488
- US-A1- 2002 175 632
- US-B1- 6 467 923

## Description

La présente invention concerne un dispositif d'affichage à cristaux liquides du type à affichage par segments et une pièce d'horlogerie comportant ce dispositif d'affichage, notamment une montre-bracelet.

Un tel type de dispositif d'affichage, dans lequel on considère que la face d'affichage est orientée vers le haut, comporte notamment :
- une cellule à cristaux liquides comprenant au moins un substrat supérieur et un substrat inférieur, au moins deux électrodes et au moins une contre-électrode qui sont structurées sur les faces en vis-à-vis des deux substrats, chaque électrode représentant un motif figuratif ou une portion de motif figuratif,
- une unité de contrôle qui commande la cellule à cristaux liquides en appliquant une tension de commande de valeur déterminée entre une électrode sélectionnée et la contre électrode de manière à modifier l'orientation des cristaux liquides et à provoquer l'affichage des motifs figuratifs correspondants, et
- un module de rétro-éclairage, agencé sous la cellule à cristaux liquides, du côté opposé à la face d'affichage, comportant au moins une première et une seconde sources lumineuses de couleurs différentes qui émettent des rayons lumineux à l'intérieur d'au moins un guide de lumière comprenant une face supérieure de sortie des rayons lumineux.

Ce type de dispositif d'affichage présente l'avantage d'être bon marché car la cellule à cristaux liquides, dite à affichage par segments, est de technologie simple et éprouvée. Elle utilise des électrodes en forme de segments de caractères ce qui permet l'emploi d'une électronique de commande simplifiée, l'alimentation de chaque électrode ou segment étant commandée directement en tout ou rien, et la contre-électrode, généralement en forme de plaque, étant mise à la masse. La commande d'une telle cellule à cristaux liquides ne nécessite donc pas de balayage des lignes et des colonnes comme dans un affichage du type matriciel ce qui, en plus de simplifier l'électronique de commande, favorise la lisibilité des motifs d'affichage.

Généralement, les cellules à cristaux liquides à affichage par segments sont monochromes. Les segments d'affichage apparaissent par exemple en noir, lorsque l'on place un film réflecteur sous la cellule et que l'on alimente lesdits segments pour empêcher la réflexion de la lumière vers la face d'affichage. Les segments d'affichage peuvent aussi apparaître dans la couleur de la source lumineuse du module de rétro-éclairage.

Pour augmenter les possibilités d'affichage et améliorer l'aspect esthétique, il a été proposé de rendre le dispositif d'affichage multicolore en utilisant un module de rétro-éclairage comportant plusieurs sources lumineuses de couleurs d'émission différentes.

Un tel type de dispositif d'affichage est décrit dans le document JP 3217818 A. Dans ce document, il est prévu de synchroniser la commande d'affichage des segments, la commande d'affichage des caractères, et la commande d'allumage des sources lumineuses par l'intermédiaire d'un circuit de commande central de manière à permettre d'afficher successivement chaque segment dans une des couleurs.

Un autre type de dispositif d'affichage est décrit dans le document US 6,467,923. Dans ce document, il est prévu un dispositif d'affichage dont la cellule à cristaux liquides est éclairée par un module de rétro-éclairage. Ledit module comporte deux sources lumineuses qui peuvent être de couleurs différentes et qui émettent dans un guide de lumière comportant des irrégularités de surface définissant des séries de prismes, chaque série étant destinée à dévier le rayonnement d'une source lumineuse vers ladite cellule.

Cette solution n'est pas complètement satisfaisante car elle nécessite une électronique de commande compliquée pour réaliser la synchronisation. De plus, à un instant donné, tous les segments affichés sont éclairés avec la même couleur, ou le même mélange de couleur obtenu par l'allumage de plusieurs sources simultanément.

La présente invention vise à remédier aux inconvénients précités en proposant un dispositif d'affichage plus simple à fabriquer et plus simple à commander. La présente invention vise aussi à proposer un dispositif d'affichage présentant un meilleur rendement lumineux donc une meilleure visibilité des motifs à afficher.

Dans ce but, l'invention propose un dispositif d'affichage du type décrit précédemment, caractérisé en ce que les prismes sont répartis sélectivement dans les zones du guide de lumière qui sont situées uniquement en regard des électrodes de la cellule, de manière que les rayons lumineux émis par les sources lumineuses soient répartis et concentrés sur les électrodes.

Grâce au dispositif d'affichage selon l'invention, il est possible de réaliser un dispositif d'affichage multicolore économique. En effet, ce dispositif d'affichage bénéficie d'un système de rétro-éclairage à haut rendement lumineux puisque la plus grande partie de la lumière émise par les sources lumineuses est utilisée pour l'éclairage des portions de motifs. L'énergie lumineuse n'est pas perdue à éclairer des zones de la cellule ne servant pas à l'affichage.

Selon un mode de réalisation avantageux, la première série de prismes est agencée sous une première série d'électrodes, et la seconde série de prismes est agencée sous une seconde série d'électrodes distincte de la première. Ainsi, le circuit de commande du dispositif de rétro-éclairage peut être très simple. En effet, la couleur des motifs figuratifs est déterminée par construction. Il suffit donc d'allumer simultanément toutes les sources lumineuses et les motifs figuratifs sont affichés dans les couleurs prédéfinies.

Selon un autre mode de réalisation avantageux, au moins une électrode correspondant à un motif figuratif dit multicolore est agencée au-dessus de prismes appartenant à la première et à la seconde séries, de manière à permettre l'affichage sélectif du motif multicolore en :
- une première couleur correspondant aux prismes de la première série, lorsque la première source lumineuse est allumée et l'autre éteinte,
- une seconde couleur correspondant aux prismes de la seconde série, lorsque la seconde source lumineuse est allumée et l'autre éteinte,
- une combinaison de couleurs lorsque les deux sources lumineuses sont allumées simultanément.

Selon une première version de ce mode de réalisation, les prismes de la première et de la seconde séries sont entrelacés sous l'électrode correspondant au motif multicolore pour que l'allumage simultané des deux sources lumineuses produise une nouvelle couleur correspondant à la superposition des deux couleurs initiales.

Selon une seconde version de ce mode de réalisation, les prismes de la première série et les prismes de la seconde série sont regroupés dans des zones distinctes, sous l'électrode correspondant au motif multicolore, pour permettre l'affichage du motif multicolore en plusieurs zones colorées lorsque les deux sources lumineuses sont allumées simultanément.

Ce mode de réalisation permet donc une grande liberté dans la conception des motifs à afficher, sans qu'il soit nécessaire de prévoir un circuit de commande complexe puisqu'il suffit de commander l'allumage ou l'extinction d'une source lumineuse.

De préférence, les motifs figuratifs sont des caractères et chaque électrode a la forme d'un segment de caractère, ce qui simplifie la réalisation du dispositif d'affichage et sa commande.

Avantageusement, un polariseur absorbant du type transflectif est agencé sur la face inférieure de la cellule à cristaux liquides et un polariseur réflectif du type transmissif est agencé entre le guide de lumière et le polariseur absorbant. De plus, un polariseur réflectif du type transmissif est agencé au-dessus de la cellule à cristaux liquides. Grâce à ces polariseurs réflectifs, on obtient un meilleur contraste entre les motifs figuratifs affichés et le fond sur lequel ils apparaissent. De plus, ces polariseurs réflectifs rendent les motifs figuratifs non sélectionnés non visibles pour l'observateur.

De préférence, le guide de lumière à la forme d'une plaque, ce qui facilite notamment son agencement sous la cellule d'affichage à cristaux liquides en minimisant son encombrement. Un film optique de diffusion agencé sur la face supérieure du guide de lumière permet d'obtenir un éclairage homogène des motifs figuratifs.

La présente invention propose aussi une pièce d'horlogerie caractérisée en ce qu'elle comporte un dispositif d'affichage selon l'une des caractéristiques précédentes. On peut ainsi réaliser de manière économique une pièce d'horlogerie telle qu'une montre avec un affichage multicolore bénéficiant d'une faible consommation, et ne nécessitant pas un circuit de commande complexe.

Avantageusement, la pièce d'horlogerie comporte une plaque à circuits imprimés sur laquelle sont montées des diodes électroluminescentes qui constituent les sources lumineuses du dispositif d'affichage, et le guide de lumière est agencé au-dessus de la plaque à circuits imprimés. On obtient ainsi une pièce d'horlogerie de faible épaisseur axiale et facile à assembler, en utilisant un minimum de composants et un minimum d'opérations d'assemblage.

D'autres caractéristiques et avantages de la présente invention apparaîtront plus clairement à la lecture de la description détaillée qui suit, faite en référence aux dessins annexés donnés à titre d'exemple non limitatifs et dans lesquels :
- la figure 1 est une vue en coupe axiale qui représente schématiquement une pièce d'horlogerie équipée d'un dispositif d'affichage conforme aux enseignements de l'invention selon un premier mode de réalisation;
- la figure 2 est une vue agrandie d'un détail de la figure 1;
- la figure 3 est une vue de dessus qui représente schématiquement la cellule d'affichage à cristaux liquides du dispositif d'affichage de la figure 1 et ses électrodes;
- la figure 4 est une vue de dessus agrandie qui représente schématiquement une portion du guide de lumière équipant le dispositif d'affichage de la figure 1 et qui illustre le positionnement des prismes de réflexion,
- la figure 5 est une vue similaire à la précédente qui représente schématiquement un second mode de réalisation de l'invention comportant un segment d'affichage multicolore;
- la figure 6 est une vue similaire à la précédente qui représente schématiquement une variante de réalisation du second mode de réalisation dans laquelle le segment multicolore comporte plusieurs zones colorées.

Dans la suite de la description, des éléments identiques ou similaires seront désignés par des références identiques.

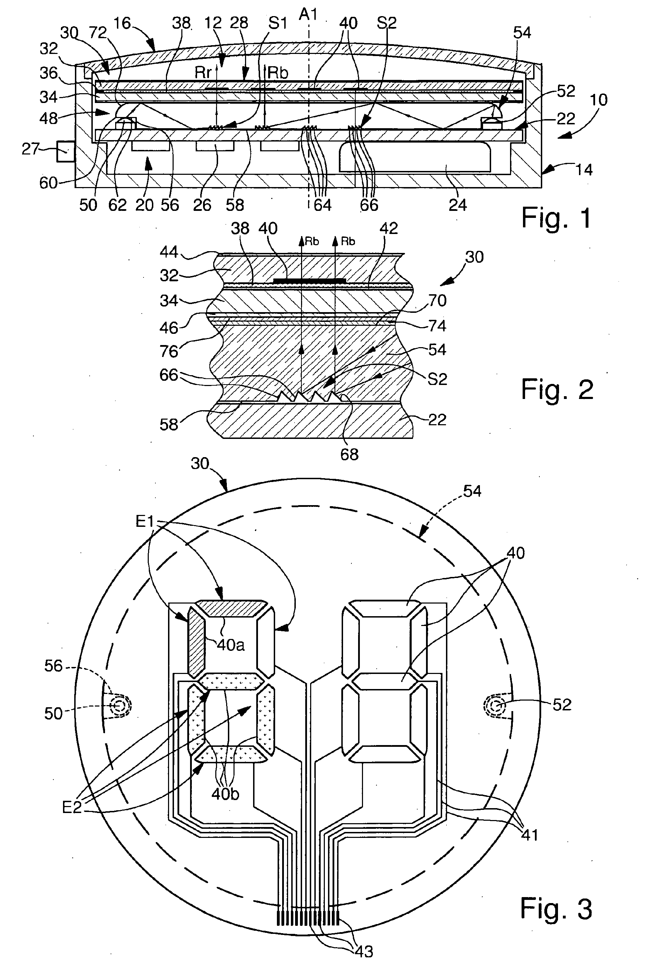

Sur la figure 1, on a représenté schématiquement une pièce d'horlogerie 10 tel qu'une montre-bracelet équipée d'un dispositif d'affichage 12 à cristaux liquides réalisé conformément aux enseignements de l'invention.

La pièce d'horlogerie 10 comporte un boîtier 14, globalement de forme cylindrique d'axe A1, qui est fermé dans sa partie supérieure par une glace 16 de protection permettant à un utilisateur de consulter les indications affichées par le dispositif d'affichage 12 agencé à l'intérieur du boîtier 14.

Dans la suite de la description, on utilisera à titre non limitatif une orientation verticale suivant l'axe A1.

Le boîtier 14 contient un circuit électronique 20 de commande qui est agencé ici sur la face inférieure d'une plaque à circuits imprimés 22 et qui est alimenté par une pile 24. Le circuit électronique 20 comporte notamment une unité de contrôle 26 permettant de commander le dispositif d'affichage 12 en vue d'afficher des informations horaires ou autres. Des moyens de commande externe, tels qu'un bouton-poussoir 27, peuvent être prévus sur la face extérieure du boîtier 14 pour permettre à un utilisateur de commander le circuit électronique 20.

Le dispositif d'affichage 12, dont la face d'affichage 28 est orientée vers le haut, du côté d'un observateur, comporte une cellule 30 à cristaux liquides qui comprend un substrat supérieur 32, ou substrat avant, et un substrat inférieur 34, ou substrat arrière. Les deux substrats 32, 34 en forme de plaques sont séparés par un cadre de scellement 36 qui définit un volume pour le confinement des cristaux liquides 38. La cellule 30 est de préférence du type nématique torsadée ("twisted nematic").

La structure de la cellule 30 est illustrée notamment sur les figures 2 et 3.

La cellule 30 comporte une série d'électrodes 40 qui sont structurées sur la face inférieure du substrat supérieur 32, et une contre-électrode 42 en forme de plaque qui est structurée sur la face supérieure du substrat inférieur 34.

Chaque électrode 40 représente une portion de motif figuratif. Selon le mode de réalisation représenté, chaque électrode 40 a la forme d'un segment rectiligne, et ces segments sont disposés de manière à former deux "8", ce qui permet, en sélectionnant de manière appropriée les segments affichés à un instant donné, de représenter tous les chiffres de "0" à "9", ainsi que certaines lettres.

Bien entendu, selon des variantes de réalisations (non représentées) de l'invention, les électrodes 40 peuvent avoir des formes plus complexes, par exemple une électrode 40 peut représenter à elle seule un caractère, un symbole, ou un motif décoratif tel qu'une fleur.

Chaque électrode 40 est liée une piste 41 d'alimentation électrique qui comporte, à l'extrémité opposée à l'électrode 40, une zone de contact 43 permettant, par des moyens de connexion (non représentés) tels que des connecteurs Zebra, le raccordement électrique de l'électrode 40 au circuit électrique 20 de commande. Les zones de contact 43 de toutes les électrodes 40 sont ici alignées pour faciliter ce raccordement. Les pistes 41 et les zones de contact 43 sont structurées sur la face interne du substrat supérieur 32 comme les électrodes 40.

De manière similaire, la contre-électrode 42 comporte des moyens de connexion (non représentés) pour son raccordement électrique avec le circuit électronique 20 de commande.

De manière conventionnelle, la cellule 30 comporte un filtre polarisant supérieur 44 et un filtre polarisant inférieur 46 qui sont agencés respectivement sur la face supérieure du substrat supérieur 32 et sur la face inférieure du substrat inférieur 34. Les plans de polarisation de la lumière de ces deux filtres 44, 46 forment entre eux un angle de quatre-vingt dix degrés.

Avantageusement, le filtre polarisant supérieur 44 est constitué par un filtre polarisant du type réflectif, appelé aussi polariseur réflectif, et le filtre polarisant inférieur 46 est constitué par un filtre polarisant du type absorbant, appelé aussi polariseur absorbant.

Dans la présente demande, on entend par "polariseur réflectif" un filtre polarisant qui réfléchit la lumière reçue depuis le haut, lorsqu'il est agencé sous un autre filtre polarisant et que les deux filtres sont croisés. Avec une cellule fonctionnant en mode non rétro-éclairé, ce type de filtre permet d'afficher des segments de la couleur de l'éclairage ambiant.

Par opposition, on entend par "polariseur absorbant" un filtre polarisant qui absorbe la lumière reçue depuis le haut, lorsqu'il est agencé sous un autre filtre polarisant et que les deux filtres sont croisés. Avec une cellule fonctionnant en mode non rétro-éclairé, ce type de filtre permet d'afficher des segments de couleur gris foncé.

De plus, le filtre polarisant supérieur 44 est choisi parmi les polariseurs réflectifs du type transmissif, c'est-à-dire qu'il est prévu pour laisser passer la lumière dans les deux sens.

Le filtre polarisant inférieur 46 est choisi parmi les polariseurs absorbants du type transflectif avec une couche réfléchissante agencée du coté de sa face inférieure pour réfléchir la lumière vers le haut. Ainsi, en mode non rétro-éclairé, la lumière ambiante qui traverse la cellule 30 se réfléchit sur le filtre polarisant inférieur 46 et, en mode rétro-éclairé, la lumière émise par un module de rétro-éclairage 48 situé sous la cellule 30 traverse le filtre polarisant inférieur 46 en direction de la face d'affichage 28.

La cellule 30 est commandée par l'unité de contrôle 26 qui applique une tension de commande de valeur déterminée entre une électrode 40 sélectionnée et la contre-électrode 42 de manière à modifier l'orientation des cristaux liquides et à provoquer l'affichage des motifs figuratifs correspondants.

Le module de rétro-éclairage 48 est agencé sous la cellule 30 à cristaux liquides, du côté opposé à la face d'affichage 28. Il comporte ici une première et une seconde sources lumineuses 50, 52 de couleurs différentes qui émettent des rayons lumineux Ri à l'intérieur d'un guide de lumière 54 en forme de plaque. La première source lumineuse 50 émet par exemple des rayons rouges Rr, et la seconde source lumineuse 52 émet par exemple des rayons bleus Rb.

Bien entendu, le module de rétro-éclairage 48 peut comporter plus de deux sources lumineuses 50, 52. Dans ce cas, plusieurs sources lumineuses 50, 52 peuvent être de même couleur.

Selon le mode de réalisation représenté ici, les sources lumineuses 50, 52 sont constituées par des diodes 50, 52 électroluminescentes colorées qui sont montées sur la face supérieure de la plaque à circuits imprimés 22 et qui sont reliés électriquement au circuit électronique 20 de commande. Ces diodes 50, 52 sont prévues pour produire un faisceau lumineux globalement suivant une direction axiale orientée vers le haut. Chaque diode 50, 52 est reçue dans une encoche 56 aménagée dans la face étendue inférieure 58 du guide de lumière 54, à proximité du bord périphérique 60 du guide de lumière 54, de manière que la majeure partie des rayons lumineux émis par chaque diode 50, 52 pénètre dans le guide de lumière 54 à travers une surface d'entrée 62 adaptée.

Une face du guide de lumière 54, ici sa face inférieure 58, est pourvue de prismes 64, 66 qui dévient les rayons lumineux Ri émis par les diodes 50, 52 vers la face d'affichage 28. Une première série S1 de prismes 64 est orientée vers la première diode 50 pour dévier les rayons lumineux Rr de la première diode 50 et une seconde série S2 de prismes 66 est orientée vers la seconde diode 52 pour dévier les rayons lumineux Rb de la seconde diode 52.

Les prismes 64, 66 sont formés ici par des évidements aménagés dans la face inférieure 58 du guide de lumière 54. Chaque prisme 64, 66 comporte une surface de réflexion 68 dont la normale correspond à la bissectrice de l'angle formé par une première droite, passant par la surface de réflexion 68 et la diode 50, 52 correspondante, avec une seconde droite, passant par la surface de réflexion 68 et l'oeil de l'observateur. Ainsi, une certaine proportion des rayons lumineux Ri émis par chaque diode 50, 52 atteint la surface de réflexion 68 des prismes associés 64, 66, soit en incidence directe, soit après une ou plusieurs réflexions préalables sur au moins l'une des faces étendues inférieure 58 et supérieure 70 du guide de lumière 54.

Les rayons lumineux Ri qui atteignent la surface de réflexion 68 sont réfléchis vers le haut selon le principe de la réflexion totale, compte tenu de leur angle d'incidence, ce qui produit un faisceau lumineux de rétro-éclairage émis vers la face d'affichage 28 à travers la cellule 30.

La proportion des rayons lumineux Ri qui se réfléchissent sur la surface de réflexion 68 peut être ajustée en fonction de certains paramètres géométriques d'un prisme 64, 66 donné, en particulier en fonction de la distance séparant la diode 50, 52 associée de la surface de réflexion 68 et en fonction de la hauteur du prisme 64, 66 par rapport à l'épaisseur du guide de lumière 54. L'homme du métier ne rencontrera pas de difficulté particulière pour adapter ces paramètres en fonction de ses besoins.

Sur la figure 2, l'angle entre la surface de réflexion 68 et la face étendue inférieure 58 est sensiblement de quarante-cinq degrés, de sorte que les rayons lumineux Ri sont déviés suivant une direction sensiblement axiale.

Le guide de lumière 54 peut être réalisé en tout matériau possédant les qualités requises, dont en particulier la transparence vis-à-vis de la propagation de la lumière, notamment dans le domaine visible. De manière préférée, on pourra réaliser le guide de lumière 54 en un matériau plastique du type PMMA (Polymétacrylate de méthyle), par injection, par réplication, ou par tout autre procédé adapté, les avantages de ces solutions résidant principalement dans la facilité des procédés de fabrication correspondants et dans le bas prix de revient du produit obtenu pour une production de masse.

En ayant recours aux techniques de fabrication actuelles, il est envisageable de réaliser des prismes 64, 66 présentant des dimensions de l'ordre de 10 µm. En outre, la surface de réflexion 68 peut présenter diverses formes, planes ou incurvées pour moduler la forme du faisceau réfléchi et le rendre légèrement divergent, par exemple.

Selon une variante de réalisation (non représentée), les prismes 66, 66 peuvent être réalisés en saillie sur l'une des faces étendues 58, 70 du guide de lumière 54.

Avantageusement, la portion périphérique 72 de la face supérieure 70 du guide de lumière 54 est incurvée vers la face inférieure 58, de manière que les rayons lumineux émis par les diodes 50, 52 vers le bord périphérique 60 du guide de lumière 54 puissent se réfléchir totalement sur la portion périphérique 72 et être ainsi déviés vers les prismes 64, 66 agencés dans la partie centrale du guide de lumière 54.

Bien entendu, selon une variante de réalisation (non représentée), les diodes 50, 52 peuvent être prévues pour émettre de la lumière radialement vers l'axe A1. Les diodes 50, 52 doivent alors être agencées en regard radialement d'une surface d'entrée 62 axiale.

Conformément à l'invention, les prismes 64, 66 sont répartis dans des zones du guide de lumière 54 qui sont situées sous les électrodes 40, de manière que les rayons lumineux Ri issus de la face supérieure 70 du guide de lumière 54 soient concentrés sur les électrodes 40. Ainsi, les prismes 64, 66 reproduisent globalement le contour des électrodes 40 sur la face inférieure 58 du guide de lumière 54. Les prismes 64, 66 sont situés uniquement en regard d'électrodes 40. En dehors des zones situées sous les électrodes 40, le guide de lumière 54 ne comporte pas de prismes 64, 66. Par conséquent, le guide de lumière 54 émet des rayons lumineux Ri vers le haut uniquement en regard des électrodes 40.

Selon un premier mode de réalisation, représenté sur les figures 1 à 4, la première série S1 de prismes 64 est agencée sous une première série E1 d'électrodes 40, et la seconde série S2 de prismes 66 est agencée sous une seconde série E2 d'électrodes 40 distincte de la première. Ainsi, chaque électrode 40 ne peut être éclairée que par une seule diode 50, 52 et sa couleur de rétro-éclairage correspond à la couleur de la diode 50, 52 qui l'éclaire.

De préférence, un film optique 74 de diffusion est agencé sur la face supérieure 70 du guide de lumière 54. Ce film optique 74 est utilisé pour diffuser transversalement la lumière émise par le guide de lumière 54 au-dessus des prismes 64, 66 et permettre un éclairage homogène de chaque électrode 40.

Selon des variantes de réalisation, le film optique 74 pourrait être un film de focalisation ou de structuration de la lumière émise par le guide de lumière 54, suivant l'effet de rétro-éclairage recherché.

Avantageusement, la cellule 30 comporte un polariseur réflectif 76 inférieur du type transmissif, qui est intercalé entre le filtre polarisant inférieur 46 et le film optique 74. La fonction de ce polariseur réflectif 76 inférieur sera expliquée par la suite.

Le fonctionnement du dispositif d'affichage 12 selon le premier mode de réalisation est le suivant.

En mode non rétro-éclairé, appelé aussi mode réflectif, le module de rétro-éclairage 30 n'est pas alimenté et on utilise l'éclairage ambiant pour obtenir un contraste entre les segments affichés, qui correspondent à des électrodes 40 alimentées, et les segments non affichés, qui correspondent à des électrodes 40 non alimentées. Le fonctionnement du dispositif d'affichage 12 est conventionnel et les segments affichés correspondant aux électrodes 40 alimentées apparaissent de la couleur de l'éclairage ambiant.

La lumière de l'éclairage ambiant traverse le filtre polarisant supérieur 44 puis la cellule 30 avant de se réfléchir sur la couche réfléchissante du filtre polarisant inférieur 46 puis de refaire le chemin en sens inverse vers la face d'affichage 28.

En mode rétro-éclairé, le module de rétro-éclairage 30 est alimenté et les segments correspondant aux électrodes 40 alimentées apparaissent chacun dans une couleur déterminée.

En mode rétro-éclairé, les deux diodes 50, 52 sont allumées simultanément. Par conséquent, le guide de lumière 54 émet des rayons lumineux rouge Rr sous les électrodes 40 de la première série E1 et des rayons lumineux bleus Rb sous les électrodes 40 de la seconde série E2.

Lorsque le circuit électronique 20 commande l'alimentation d'une électrode 40 déterminée pour afficher le segment correspondant du côté de la face d'affichage 28, les cristaux liquides situés sous cette électrode 40 s'orientent de manière à laisser passer la lumière émise par le module de rétro-éclairage 48 sous cette électrode 40.

Par exemple, sur la figure 3, le caractère "6" est affiché en alimentant les électrodes 40a, 40b correspondant à l'affichage de ce caractère. Comme les électrodes 40a appartiennent à la première série E1, alors les deux segments correspondants sont affichés en rouge puisque les prismes 64 situés sous ces segments sont orientés vers la diode rouge 50. Comme les électrodes 40b appartiennent à la seconde série E2, alors les quatre segments correspondants sont affichés en bleu puisque les prismes 66 situés sous ces segments sont orientés vers la diode bleue 52.

Selon ce mode de réalisation, chaque segment d'affichage est toujours éclairé par la même diode 50, 52.

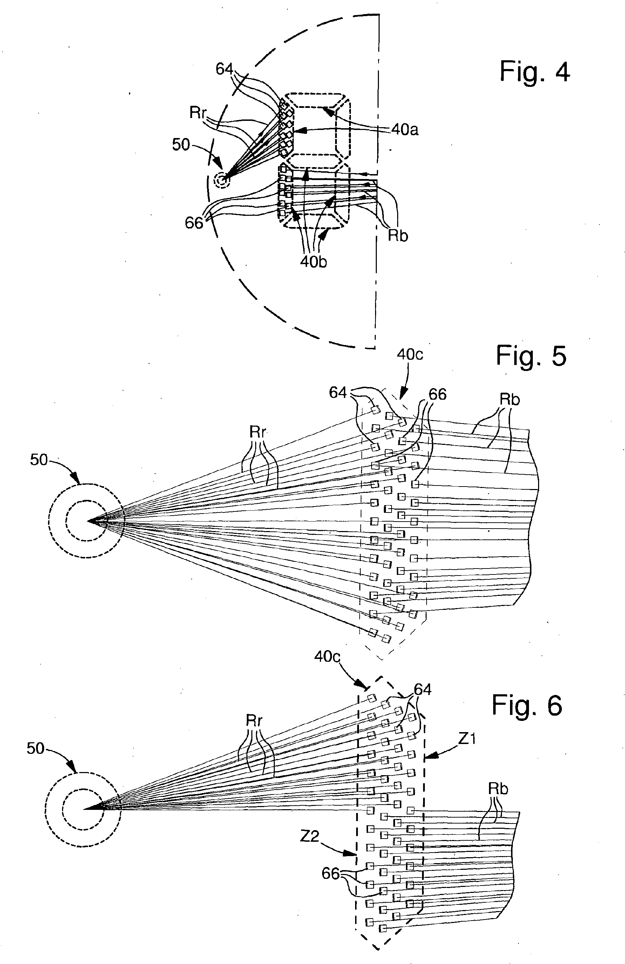

Selon un second mode de réalisation, qui est représenté sur la figure 5, au moins une électrode 40c correspondant à un segment dit multicolore est agencée au-dessus de prismes 64, 66 appartenant à la première S1 et à la seconde S2 séries. De plus, les prismes 64, 66 de la première S1 et de la seconde série S2 sont entrelacés. Ainsi, ce mode de réalisation permet d'afficher sélectivement le segment multicolore en plusieurs couleurs suivant les diodes 50, 52 qui sont allumées.

Lorsque la diode rouge 50 est allumée et la diode bleue 52 éteinte, et que l'électrode 40c correspondant au segment multicolore est alimentée, le segment multicolore est éclairé en rouge.

Lorsque la diode bleue 52 est allumée et la diode rouge 50 éteinte, et que l'électrode 40c correspondant au segment multicolore est alimentée, le segment multicolore est éclairé en bleu.

Lorsque les deux diodes 50, 52 sont allumées simultanément, et que l'électrode 40c correspondant au segment multicolore est alimentée, la lumière rouge et la lumière bleue des deux diodes 50, 52 se mélangent pour afficher le segment multicolore en magenta.

Selon une variante du second mode de réalisation, illustré par la figure 6, les prismes 64 de la première série S1 et les prismes 66 de la seconde série S2 sont regroupés dans des zones distinctes Z1, Z2, sous l'électrode 40c correspondant au segment multicolore, pour permettre l'affichage du segment multicolore en plusieurs zones colorées Z1, Z2 lorsque les deux diodes 50, 52 sont allumées simultanément. Ce mode de réalisation permet une grande variété d'aspect des segments multicolores qui peuvent apparaître avec des bandes multicolores ou avec des ronds multicolores.

Bien entendu, les deux modes de réalisation décrits précédemment peuvent être combinés de sorte que certains segments soient multicolores et que les autres soient affichés en une seule couleur.

L'utilisation d'un polariseur réflectif pour le filtre polarisant supérieur 44 présente l'avantage d'améliorer le rendement lumineux, donc la brillance des segments affichés, car il laisse passer plus de lumière qu'un filtre du type absorbant.

De plus, l'effet réfléchissant vers l'extérieur du filtre polarisant supérieur 44 permet de diminuer la visibilité des segments non affichés pour l'observateur. En effet, on constate que l'effet visuel obtenu au moyen du filtre polarisant supérieur 44 empêche l'observateur de distinguer la faible quantité de lumière qui parvient à traverser la cellule 30 au niveau des électrodes 40 non alimentées.

En mode rétro-éclairé, le polariseur réflectif 76 inférieur permet aussi de diminuer la visibilité des segments non affichés. En effet, lorsque le guide de lumière 54 émet de la lumière sous toutes les électrodes 40, y compris les électrodes 40 non alimentées, une certaine quantité de la lumière émise parvient à traverser la cellule 30 au niveau des électrodes 40 non alimentées ce qui peut rendre les segments non sélectionnés visibles à l'observateur. Le polariseur réflectif 76 inférieur permet de minimiser cette quantité de lumière non désirée. Cela est dû notamment à la réflexion d'une partie des rayons lumineux Rr, Rb sur le polariseur réflectif 76 inférieur.

## Revendications

1. Dispositif d'affichage (12) à cristaux liquides (38) comprenant une face d'affichage (28) orientée vers le haut du dispositif (12), du côté d'un observateur, ce dispositif (12) comportant :
- une cellule (30) à cristaux liquides (38) comprenant au moins un substrat supérieur (32) et un substrat inférieur (34), au moins deux électrodes (40) et au moins une contre-électrode (42) qui sont structurées sur les faces en vis-à-vis des deux substrats (30, 32), chaque électrode (40) représentant un motif figuratif ou une portion de motif figuratif,
- une unité de contrôle (26) agencée pour commander la cellule (30) à cristaux liquides (38) en appliquant une tension de commande de valeur déterminée entre une électrode (40) sélectionnée et la contre électrode (42) de manière à modifier l'orientation des cristaux liquides (38) et à provoquer l'affichage des motifs figuratifs correspondants, et
- un module de rétro-éclairage (48), agencé sous la cellule (30) à cristaux liquides, du côté opposé à la face d'affichage (28), comportant au moins une première (50) et une seconde (52) sources lumineuses de couleurs différentes qui émettent des rayons lumineux (Rr, Rb) à l'intérieur d'au moins un guide de lumière (54) comprenant une face supérieure (70) de sortie des rayons lumineux (Rr, Rb),
le guide de lumière (54) comportant une pluralités de prismes (64, 66) agencés pour dévier les rayons lumineux (Rr, Rb) vers la face d'affichage (28), une première série (S1) de prismes (64, 66) étant orientée vers la première source lumineuse (50) pour dévier les rayons lumineux (Rr) émis par la première source (50) et une seconde série (S2) de prismes (52) étant orientée vers la seconde source lumineuse (52) pour dévier les rayons lumineux (Rb) émis par la seconde source (52),
**caractérisé en ce que** les prismes (64, 66) sont répartis dans des zones du guide de lumière (54) qui sont situées uniquement en regard des électrodes (40), de manière que les rayons lumineux (Rr, Rb) issus de la face supérieure (70) du guide de lumière (54) soient concentrés sur les électrodes (40).

2. Dispositif d'affichage (12) selon la revendication précédente, **caractérisé en ce que** la première série (S1) de prismes (64) est agencée sous une première série (E1) d'électrodes (40a), et **en ce que** la seconde série (S2) de prismes (64) est agencée sous une seconde série (E2) d'électrodes (40b) distincte de la première (S1).

3. Dispositif d'affichage (12) selon l'une quelconque des revendications précédentes, **caractérisé en ce qu'**au moins une électrode (40c) correspondant à un motif figuratif dit multicolore est agencée au-dessus de prismes (64, 66) appartenant à la première (S1) et à la seconde (S2) séries, de manière à permettre l'affichage sélectif du motif multicolore en :
- une première couleur correspondant aux prismes (64) de la première série (S1), lorsque la première source lumineuse (50) est allumée et l'autre éteinte,
- une seconde couleur correspondant aux prismes (66) de la seconde série (S2), lorsque la seconde source lumineuse (52) est allumée et l'autre éteinte,
- une combinaison de couleurs lorsque les deux sources lumineuses (50, 52) sont allumées simultanément.

4. Dispositif d'affichage (12) selon la revendication précédente, **caractérisé en ce que** les prismes (64, 66) de la première (S1) et de la seconde (S2) séries sont entrelacés sous l'électrode (40c) correspondant au motif multicolore pour que l'allumage simultané des deux sources lumineuses (50, 52) produise une nouvelle couleur correspondant à la superposition des deux couleurs initiales.

5. Dispositif d'affichage (12) selon la revendication 3, **caractérisé en ce que** les prismes (64) de la première série (S1) et les prismes (66) de la seconde série (S2) sont regroupés dans des zones distinctes (Z1, Z2), sous l'électrode (40c) correspondant au motif multicolore, pour permettre l'affichage du motif multicolore en plusieurs zones (Z1, Z2) colorées lorsque les deux sources lumineuses (50, 52) sont allumées simultanément.

6. Dispositif d'affichage (12) selon l'une quelconque des revendications précédentes, **caractérisé en ce que** les motifs figuratifs sont des caractères et **en ce que** chaque électrode (40) a la forme d'un segment de caractère.

7. Dispositif d'affichage (12) selon l'une quelconque des revendications précédentes, **caractérisé en ce qu'**un polariseur absorbant (46) du type transflectif est agencé sur la face inférieure de la cellule (30) à cristaux liquides et **en ce qu'**un polariseur réflectif (76) du type transmissif est agencé entre le guide de lumière (54) et le polariseur absorbant (46).

8. Dispositif d'affichage (12) selon l'une quelconque des revendications précédentes, **caractérisé en ce qu'**un polariseur réflectif (44) du type transmissif est agencé au-dessus de la cellule (30) à cristaux liquides.

9. Dispositif d'affichage (12) selon l'une quelconque des revendications précédentes, **caractérisé en ce qu'**un film optique (74) de diffusion est agencé sur la face supérieure (70) du guide de lumière (54).

10. Dispositif d'affichage (12) selon l'une quelconque des revendications précédentes, **caractérisé en ce que** le guide de lumière (54) à la forme d'une plaque.

11. Pièce d'horlogerie (10) **caractérisée en ce qu'**elle comporte un dispositif d'affichage (12) selon l'une quelconque des revendications précédentes.

12. Pièce d'horlogerie (10) selon la revendication précédente, **caractérisée en ce qu'**elle comporte une plaque à circuits imprimés (22) sur laquelle sont montées des diodes (50, 52) électroluminescentes qui constituent les sources lumineuses (50, 52) du dispositif d'affichage (12), et **en ce que** le guide de lumière (54) est agencé au-dessus de la plaque à circuits imprimés (22).

## Claims

1. Liquid crystal (38) display device (12) including a display face (28) orientated towards the top of the device (12), on the side of an observer, said device (12) including:
- a liquid crystal (38) cell (30) including at least one top substrate (32) and one bottom substrate (34), at least two electrodes (40) and at least one counter-electrode (42) which are structured on the opposite faces of the two substrates (30, 32), each electrode (40) representing a figurative pattern or a portion of a figurative pattern;
- a control unit (26) arranged to control the liquid crystal (38) cell (30) by applying a control voltage of a determined value between a selected electrode (40) and the counter-electrode (42) so as to alter the orientation of the liquid crystals (38) and cause the display of the corresponding figurative patterns, and
- a backlighting module (48) arranged underneath the liquid crystal cell (30), on the side opposite the display face (28), including at least a first (50) and a second (52) light sources of different colours which emit light rays (Rr, Rb) inside at least one light guide (54) including a top face (70) from which escape the light rays (Rr, Rb),
the light guide (54) including a plurality of prisms (64, 66) arranged to deflect the light rays (Rr, Rb) towards the display face (28), a first series (S1) of prisms (64, 66) being orientated towards the first light source (50) to deflect the light rays (Rr) emitted by the first source (50) and a second series (S2) of prisms (52) being orientated towards the second light source (52) to deflect the light rays (Rb) emitted by the second source (52), **characterised in that** the prisms (64, 66) are distributed in zones of the light guide (54) which are located only facing the electrodes (40), so that the light rays (Rr, Rb) coming from the top face (70) of the light guide (54) are concentrated on the electrodes (40).

2. Display device (12) according to the preceding claim, **characterized in that** the first series (S1) of prisms (64) is arranged underneath a first series (S1) of electrodes (40a), and **in that** the second series (S2) of prisms (64) is arranged underneath a second series (S2) of electrodes (40b) distinct from the first series (S1).

3. Display device (12) according to any of the preceding claims, **characterized in that** at least one electrode (40c) corresponding to a figurative pattern called the multicoloured pattern is arranged above prisms (64, 66) belonging to the first (S1) and the second (S2) series, so as to allow the selective display of the multicoloured pattern in:
- a first colour corresponding to the prisms (64) of the first series (S1) when the first light source (50) is lit and the other is not lit,
- a second colour corresponding to the prisms (66) of the second series (S2), when the second light source (52) is lit and the other is not lit,
- a combination of colours when both light sources (50, 52) are simultaneously lit.

4. Display device (12) according to the preceding claim, **characterized in that** the prisms (64, 66) of the first (S1) and the second (S2) series are interlaced underneath the electrode (40c) corresponding to the multicoloured pattern so that simultaneously lighting both light sources (50, 52) produces a new colour corresponding to the superposition of the two initial colours.

5. Display device (12) according to claim 3, **characterized in that** the prisms (64) of the first series (S1) and the prisms (66) of the second series (S2) are regrouped in distinct zones (Z1, Z2) underneath the electrode (40c) corresponding to the multicoloured pattern, to display the multicoloured pattern in several coloured zones (Z1, Z2) when both light sources (50, 52) are simultaneously lit.

6. Display device (12) according to any of the preceding claims, **characterized in that** the figurative patterns are characters and **in that** each electrode (40) has the shape of a character segment.

7. Display device (12) according to any of the preceding claims, **characterized in that** an absorbing polarizer (46) of the transflective type is arranged on the bottom face of the liquid crystal cell (30) and **in that** a reflective polarizer (76) of the transmissive type is arranged between the light guide (54) and the absorbent polarizer (46).

8. Display device (12) according to any of the preceding claims, **characterized in that** a reflective polarizer (44) of the transmissive type is arranged above the liquid crystal cell (30).

9. Display device (12) according to any of the preceding claims, **characterized in that** an optical diffusion film (74) is arranged on the top face (70) of the light guide (54).

10. Display device (12) according to any of the preceding claims, **characterized in that** the light guide (54) has the shape of a plate.

11. Timepiece (10), **characterized in that** it includes a display device (12) according to any of the preceding claims.

12. Timepiece (10) according to the preceding claim, **characterized in that** it includes a printed circuit board (22) on which are mounted light emitting diodes (50, 52) which form the light sources (50, 52) of the display device (12), and **in that** the light guide (54) is arranged above the printed circuit board (22).

## Patentansprüche

1. Anzeigevorrichtung (12) mit Flüssigkristallen (38), die eine Anzeigefläche (28) aufweist, die zur Oberseite der Vorrichtung (12) auf Seiten eines Betrachters orientiert ist, wobei diese Vorrichtung (12) umfasst:
- eine Zelle (30) mit Flüssigkristallen (38), die wenigstens ein oberes Substrat (32) und ein unteres Substrat (34), wenigstens zwei Elektroden (40) und wenigstens eine Gegenelektrode (42), die auf den gegenüberliegenden Flächen der beiden Substrate (30, 32) strukturiert sind, umfasst, wobei jede Elektrode (40) ein bildliches Muster oder einen Abschnitt eines bildlichen Musters darstellt,
- eine Steuereinheit (26), die dazu ausgelegt ist, die Zelle (30) mit Flüssigkristallen (38) zu steuern, in dem sie eine Steuerspannung mit bestimmtem Wert zwischen eine ausgewählte Elektrode (40) und die Gegenelektrode (42) anlegt, derart, dass die Orientierung der Flüssigkristalle (38) modifiziert wird und die Anzeige der entsprechenden bildlichen Muster hervorgerufen wird, und
- ein Hintergrundbeleuchtungsmodul (48), das unter der Zelle (30) mit Flüssigkristallen auf der der Anzeigefläche (28) gegenüberliegenden Seite angeordnet ist und wenigstens eine erste Lichtquelle (50) und eine zweite Lichtquelle (52), die verschiedene Farben besitzen und jeweils Lichtstrahlen (Rr, Rb) in wenigstens einen Lichtleiter (54) aussenden, der eine obere Austrittsfläche (70) für die Lichtstrahlen (Rr, Rb) aufweist, umfasst,
wobei der Lichtleiter (54) mehrere Prismen (64, 66) umfasst, die dazu ausgelegt sind, die Lichtstrahlen (Rr, Rb) zu der Anzeigefläche (28) abzulenken, wobei eine erste Reihe (S1) von Prismen (64, 66) zu der ersten Lichtquelle (50) orientiert ist, um die Lichtstrahlen (Rr), die von der ersten Quelle (50) ausgesendet werden, abzulenken, und eine zweite Reihe (S2) von Prismen (66) zu der zweiten Lichtquelle (52) orientiert ist, um die Lichtstrahlen (Rb), die von der zweiten Quelle (52) ausgesendet werden, abzulenken,
**dadurch gekennzeichnet, dass** die Prismen (64, 66) in Zonen des Lichtleiters (54) verteilt sind, die sich ausschließlich gegenüber den Elektroden (40) befinden, derart, dass die von der oberen Fläche (70) des Lichtleiters (54) ausgehenden Lichtstrahlen, (Rr, Rb) auf den Elektroden (40) konzentriert werden.

2. Anzeigevorrichtung (12) nach dem vorhergehenden Anspruch, **dadurch gekennzeichnet, dass** die erste Reihe (S1) von Prismen (64) unter einer ersten Reihe (E1) von Elektroden (40a) angeordnet ist und dass die zweite Reihe (S2) von Prismen (64) unter einer von der ersten Reihe (S1) verschiedenen zweiten Reihe (E2) von Elektroden (40b) angeordnet ist.

3. Anzeigevorrichtung (12) nach einem der vorhergehenden Ansprüche, **dadurch gekennzeichnet, dass** wenigstens eine Elektrode (40c), die einem so genannten mehrfarbigen bildlichen Muster entspricht, über Prismen (64, 66) angeordnet ist, die zu der ersten Reihe (S1) und zu der zweiten Reihe (S2) gehören, derart, dass die wahlweise Anzeige des mehrfarbigen Musters ermöglicht wird in:
- einer ersten Farbe, die den Prismen (64) der ersten Reihe (S1) entspricht, wenn die erste Lichtquelle (50) eingeschaltet und die andere ausgeschaltet ist,
- einer zweiten Farbe, die den Prismen (66) der zweiten Reihe (S2) entspricht, wenn die zweite Lichtquelle (52) eingeschaltet ist und die andere ausgeschaltet ist,
- einer Kombination von Farben, wenn die beiden Lichtquellen (50, 52) gleichzeitig eingeschaltet sind.

4. Anzeigevorrichtung (12) nach dem vorhergehenden Anspruch, **dadurch gekennzeichnet, dass** die Prismen (64, 66) der ersten Reihe (S1) und der zweiten Reihe (S2) unter der Elektrode (40c), die dem mehrfarbigen Bild entspricht, verschachtelt sind, damit die gleichzeitige Beleuchtung der beiden Lichtquellen (50, 52) eine neue Farbe erzeugt, die der Überlagerung der zwei ursprünglichen Farben entspricht.

5. Anzeigevorrichtung (12) nach Anspruch 3, **dadurch gekennzeichnet, dass** die Prismen (64) der ersten Reihe (S1) und die Prismen (66) der zweiten Reihe (S2) in verschiedenen Zonen (Z1, Z2) unter der Elektrode (40c), die dem mehrfarbigen Muster entspricht, gruppiert sind, um die Anzeige des mehrfarbigen Musters in mehreren farbigen Zonen (Z1, Z2) zu ermöglichen, wenn die zwei Lichtquellen (50, 52) gleichzeitig beleuchtet werden.

6. Anzeigevorrichtung (12) nach einem der vorhergehenden Ansprüche, **dadurch gekennzeichnet, dass** die bildlichen Muster Zeichen sind und dass jede Elektrode (40) die Form eines Zeichensegments hat.

7. Anzeigevorrichtung (12) nach einem der vorhergehenden Ansprüche, **dadurch gekennzeichnet, dass** ein absorbierender Polarisator (46) des transflektiven Typs auf der unteren Fläche der Zelle (30) mit Flüssigkristallen angeordnet ist und dass ein reflektierender Polarisator (76) des transmissiven Typs zwischen dem Lichtleiter (54) und dem absorbierenden Polarisator (46) angeordnet ist.

8. Anzeigevorrichtung (12) nach einem der vorhergehenden Ansprüche, **dadurch gekennzeichnet, dass** ein reflektierender Polarisator (44) des transmissiven Typs über der Zelle (30) mit Flüssigkristallen angeordnet ist.

9. Anzeigevorrichtung (12) nach einem der vorhergehenden Ansprüche, **dadurch gekennzeichnet, dass** auf der oberen Fläche (70) des Lichtleiters (54) ein optisch streuender Film (74) angeordnet ist.

10. Anzeigevorrichtung (12) nach einem der vorhergehenden Ansprüche, **dadurch gekennzeichnet, dass** der Lichtleiter (54) die Form einer Platte hat.

11. Zeitmessgerät (10), **dadurch gekennzeichnet, dass** es eine Anzeigevorrichtung (12) nach einem der vorhergehenden Ansprüche umfasst.

12. Zeitmessgerät (10) nach dem vorhergehenden Anspruch, **dadurch gekennzeichnet, dass** es eine Flachbaugruppe (22) umfasst, auf der Leuchtdioden (50, 52) montiert sind, die die Lichtquellen (50, 52) der Anzeigevorrichtung (12) bilden, und dass der Lichtleiter (54) über der Flachbaugruppe (22) angeordnet ist.
